# EUROPÄISCHE PATENTANMELDUNG

(11) **EP 2 213 441 A2**
(43) Veröffentlichungstag der Anmeldung: **04.08.2010**
(21) Anmeldenummer: 10161303.2
(22) Anmeldetag: 17.10.2008
(51) Int. Cl.: B29C 45/28, B29C 67/24, B29C 45/73

(54) **Formwerkzeug mit intergriertem Injektor**

(30) Priorität: 18.10.2007 DE 102007050332
(62) Teilanmeldung aus: 08805133.9
(71) Anmelder: KraussMaffei Technologies GmbH, 80997 München (DE)
(72) Erfinder: SÖCHTIG, Wolfgang, verstorben (DE)
(74) Vertreter: Zollner, Richard

(57) **Zusammenfassung**

Die vorliegende Erfindung betrifft ein Verfahren zum Betrieb eines zumindest teilweise in einem Formwerkzeug aufgenommenen Injektors (16), dessen Austragsöffnung in die geschlossene Kavität mündet, mit dem Material in die geschlossene Kavität eines Formwerkzeugs eingespritzt wird.

Um zu verhindern, dass reaktive Materialien in dem Injektor aushärten wird dieser temperiert, insbesondere gekühlt.

## Beschreibung

Die vorliegende Erfindung betrifft ein Formwerkzeug gemäß dem Oberbegriff des Anspruchs 1.

Seit langem ist es bekannt, Kavitäten von Spritzgießformen mittels eines Einspritzprozesses mit einem Thermoplastmaterial zu füllen. Seit einiger Zeit ist es überdies bekannt, Kavitäten von geschlossenen Formwerkzeugen durch Injektion von niedriger viskosen Materialien, beispielsweise Polyurethan, zu füllen, um so Oberflächen, Dekore oder Häute herzustellen.

In einer bekannten Ausführungsform wird ein beispielsweise aus einem Thermoplastmaterial bestehendes Trägerelement in eine vergrößerte Kavität eingelegt, so dass zwischen dem Trägerelement und einer Kavitätswand noch ein gegenüber der Außenumgebung abgeschlossener Freiraum verbleibt. Wird in diesem Raum ein niedrig viskoses Material eingebracht und die Kavität vollständig gefüllt, so entsteht durch diesen Überflutungsprozess eine Beschichtung des Trägerbauteils. Solche Überflutungsprozesse sind ebenfalls aus dem Stand der Technik bekannt. Bei der Verwendung von Polyurethan als Überflutungsmaterial werden dabei Mischköpfe verwendet, in denen die reaktiven Ausgangsmaterialien Polyol und Isocyanat vor dem Injizieren miteinander vermischt werden. Der jeweilige Mischkopf wird an das Formwerkzeug bzw. die Einbringöffnung unmittelbar angedockt, und durch den Mischkopf wird das reaktive Gemisch in den Kavitätsraum eingebracht.

Aufgabe der vorliegenden Erfindung ist es, ein Formwerkzeug anzugeben, mit dem insbesondere in eine vergrößerte Kavität eingelegte Produkte überflutet bzw. beschichtet werden können.

Diese Aufgabe wird durch die im Anspruch 1 genannten Merkmale gelöst.

Dabei ist ein Kerngedanke der vorliegenden Erfindung darin zu sehen, dass ein Injektor in ein Formwerkzeug zumindest teilweise integriert ist, wobei in dem geschlossenen Formwerkzeug eine vollständig gegenüber der Außenumgebung abgeschlossene Kavität ausgebildet bzw. ausbildbar ist. Dabei mündet die Austragsöffnung des Injektors unmittel oder mittelbar in die abgeschlossene Kavität. Der Injektor ist dabei so ausgebildet, dass er sowohl in einem Einspritzbetrieb wie auch in einem Rezirkulationsbetrieb betrieben werden kann. Dabei sind ein Materialzufuhrkanal und ein Materialrückflusskanal über einen Verbindungsraum strömungsmäßig miteinander verbunden. Ist nun eine Injektornadel des Injektors in einer geöffneten Position angeordnet, beispielsweise zurückgezogen, so ist der Verbindungsraum mit der Austrittsöffnung strömungsmäßig verbunden, und das Beschichtungsmaterial kann über den Materialzufuhrkanal, den Verbindungsraum und die Austragsöffnung in die Kavität (beispielsweise für die Überflutung) gelangen. In einer Geschlossen-Stellung beaufschlagt die Injektornadel die Austragsöffnung und verschließt diese, so dass nunmehr das Material über den Materialrückflusskanal zu einem Behälter zurückfließt.

Gemäß einer vorteilhaften Ausführungsform ist in der Versorgungsleitung stromabwärts des Injektors ein schaltbares Ventil angeordnet. Ist dieses schaltbare Ventil geschlossen, so kann das Material lediglich über einen geöffneten Injektor austreten. Ist die Injektornadel in der Verschlussposition und das Ventil stromabwärts des Injektors geöffnet, so ist eine Rezirkulation des Materials zurück zu dem Behälter möglich.

Eine Rezirkulation ist insbesondere dann nützlich, wenn als Beschichtungsmaterial ein reaktives oder vernetzendes Material verwendet wird, welches ohne Rezirkulation die Düsen verstopfen könnte.

Zwar ist es prinzipiell möglich, dass das Material durch einen Unterdruck, beispielsweise durch ein sogenanntes Vakuumflutungsverfahren in die Kavität hineingezogen wird. Allerdings ist es sicherlich von Vorteil, wenn das Material für die Überflutung bzw. Beschichtung auch mit Druck beaufschlagt ist. Dazu könnte eine Pumpe strömungsmäßig vor dem Injektor vorgesehen sein.

Eine relativ simple Möglichkeit ist die Realisierung der Pumpe als Kolbenpumpe mit einem einzigen Kolben, der in eine Zylinderanordnung eintaucht. Gemäß einer bevorzugten Ausführungsform wird der Kolben durch einen Elektromotor unter Zwischenschaltung einer Spindel-Mutter-Kombination angetrieben. Durch den Betrieb des Motors kann auch die in die Kavität eingebrachte Menge gesteuert werden.

Wird strömungsmäßig vor der Pumpe in der Versorgungsleitung ein weiteres Ventil angeordnet, so kann durch abwechselndes Schalten der Ventile sowie Öffnen des Injektors auf einfache Weise zwischen dem Rezirkulationsbetrieb und dem Einspritzbetrieb umgeschaltet werden. Dies wird genauer noch in dem Ausführungsbeispiel beschrieben.

Der Injektor ist vorteilhafterweise in einem Basisgehäuse aufgenommen und gehalten, welches am Formwerkzeug und/oder an der Aufspannplatte befestigt ist. Damit lässt sich das Formwerkzeug sozusagen integral mit dem Injektor ausbilden, so dass Formwerkzeug und Injektor eine Einheit bilden. Das Basisgehäuse kann ein- oder mehrteilig ausgebildet sein. Auch ist es möglich, verschiedene Gehäuse für verschiedene Einheiten vorzusehen, beispielsweise ein Gehäuse für den Injektor und ein Gehäuse für die Pumpen-Ventil-Kombination.

Eine besonders kompakte Bauweise ist dann erreicht, wenn ein Teil der Pumpe wie auch die Zuführleitungen und die schaltbaren Ventile zumindest teilweise im Basisgehäuse integriert sind.

Je nach verwendetem Material ist es möglicherweise nützlich oder sogar notwendig, den Injektor selbst zu temperieren, beispielsweise zu kühlen oder zu heizen. Dazu weist der Injektor entsprechende Temperierkanäle sowie Anschlüsse für das Temperiermedium auf, die mit diesen Temperierkanälen verbunden sind.

Eine besonders bevorzugte Ausführungsform ist **dadurch gekennzeichnet, dass** zwischen dem Injektor und dem Formwerkzeug ein Temperierelement, beispielsweise ein Kühlelement zwischengeschaltet sein. Als solches Temperierelement ist beispielsweise ein Peltierelement möglich, dass auf der einen Seite den Injektor kühlt und auf der anderen Seite das Werkzeug heizt. Beide Funktionen, also sowohl das Kühlen wie auch das Heizen wirken sich besonders optimal aus. Das Kühlen führt dazu das bestimmte zu verwendende Materialien im Injektor möglichst nicht ausreagieren. Andererseits führt das Heizen der Form dazu, dass der Reaktions- oder Härtungsprozess in der Kavität möglichst schnell abläuft. Auch ist es möglich, mehrere Peltierelemente sozusagen in Reihe hintereinander zu schalten, so dass die Temperaturdifferenz zwischen der kalten und er heißen Seite groß gewählt werden kann.

Gemäß einer bevorzugten Ausführungsform der Erfindung ist die Injektionsnadel so ausgestaltet, dass in der Verschlussposition die Stirnseite der Spitze der Injektionsnadel bündig mit der Kavitätsoberfläche abschließt und sozusagen einen Teil dieser Kavitätsoberfläche bildet.

Eine konkrete Ausführungsform der vorliegenden Erfindung wird nachfolgend anhand beigefügter Zeichnungen näher erläutert. Die Zeichnungen zeigen in
- Figur 1: eine schematische Seitenansicht eines mit einem teilweise dargestellten Formwerkzeug integrierten Injektors,
- Figur 2: eine schematische Schnittdarstellung entlang der Linie B-B aus Figur 3,
- Figur 3: eine Draufsicht auf einen Injektor wie in Figur 1 dargestellt,
- Figur 4: einen Schnitt gemäß Linie D-D aus Figur 1,
- Figur 5: ein Flussdiagramm bei dem in den Figuren 1 bis 4 dargestellten Injektor und
- Figur 6: eine vergrößerte Teilschnitt-Darstellung der einer Ausführungsvariante der Düsenspitze.

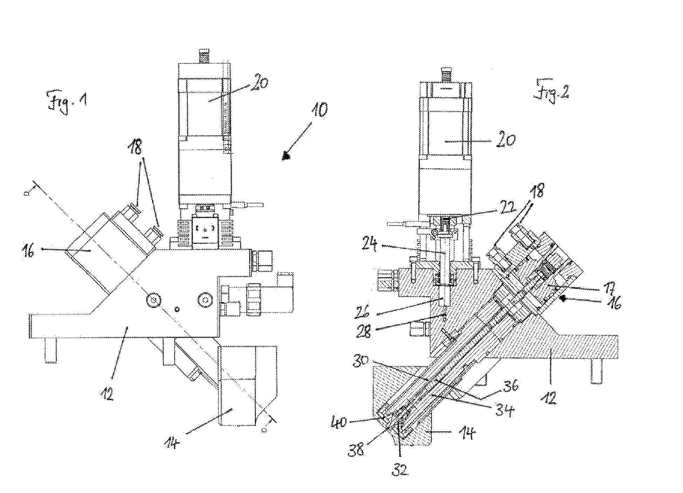

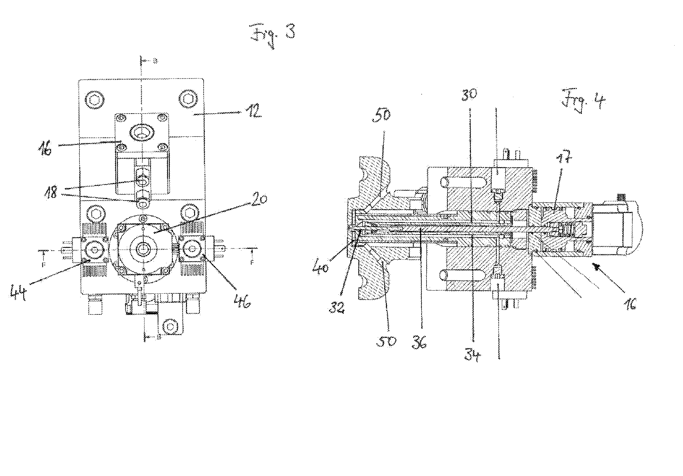

In den Figuren 1 bis 4 ist eine Basisplatte 12 zu erkennen, in der ein Injektor 16 in einer Öffnung passgenau und entsprechend abgedichtet fest aufgenommen ist. Der Injektor 16 umfasst ein im Wesentlichen zylindrisches Gehäuse mit einem stirnseitig angeordneten Antriebsblock, in dem ein Kolben 17 mittels eines Fluid betätigbar hin und her verschiebbar ist. Das Fluid wird über die beiden Fluidanschlüsse 18 zugeführt. Je nach Beaufschlagung kann der Kolben zwischen zwei Extrempositionen hin und her bewegt werden. In Fig. 2 ist zu erkennen, dass im Antriebsbereich des Injektors der Kolben federbeaufschlagt ist, Mit dieser Feder bzw. der ebenfalls dargestellten Schraube (Madenschraube) kann die Vorspannung für die Injektornadel eingestellt werden.

Der Kolben 17 ist unmittelbar verbunden mit einer Injektornadel 36, die unter Betätigung des Kolbens 17 ebenfalls in zwei Positionen verschoben werden kann. Parallel zum Kolben verläuft innerhalb des Gehäuses des Injektors 16 zum einen eine Materialzufuhrbohrung 30 sowie eine Materialrückführbohrung 34, die im vorderen Bereich jeweils in einen Verbindungsraum 32 münden, über den eine Strömungsverbindung zwischen den beiden Kanälen 30 und 34 hergestellt ist. Die Injektornadel 36 ragt durch diesen Verbindungsraum 32 hindurch, und deren Spitze 38 sitzt in ihrem vorgefahrenen Zustand auf einer Austragsöffnung, die in geöffnetem Injektornadelzustand eine unmittelbare Verbindung zum Verbindungsraum 32 aufweist. Wie insbesondere in Figur 2 zu erkennen ist, ragt der vordere Teil des Injektors 16 in ein hier nur teilweise dargestelltes Formwerkzeug 14 hinein und endet unweit der Kavitätsoberfläche, wobei die Austragsöffnung in die geschlossene, aber nicht weiter dargestellte Kavität mündet.

Um eine Kühlung des Injektors 16 erreichen zu können, ist der Injektor mit Kühlkanälen durchsetzt, die vorliegend nicht weiter dargestellt sind. Ebenfalls zur Kühlung ist zwischen dem vorderen Ende des Injektors 16 und dem Formwerkzeug 14 ein scheibenförmiges Peltier-Element 40 angeordnet, welches unter entsprechender elektrischer Beaufschlagung injektorseitig kühlt und werkzeugseitig heizt. Soll die Temperaturdifferenz zischen heißer und kalter Seite höher gewünscht sein, so ist es auch möglich mehr als ein Peltier-Element 40 anzuordnen und diese temperaturmäßig sozusagen in Reihe zu schalten.

Auf dem Basisgehäuse 12 sind zum einen zwei Elektro-Ventile 44 und 46 sowie dazwischen eine Kolbenpumpe 20 angeordnet. Die Kolbenpumpe 20 ist zusammen mit der entsprechenden Ausgestaltung der Basisplatte 12 definiert. Deren Funktionsweise geht insbesondere aus Figur 2 hervor. Die Kolbenpumpe 20 weist nämlich im oberen Bereich einen Elektromotor auf, der eine Spindel 22 drehmäßig antreibt. Unter Zwischenschaltung einer Mutter wird die Rotationsbewegung in eine axiale Vorschub-oder Rückzugsbewegung umgewandelt, so dass ein mit der Spindel verbundener Kolben 24 in eine passgenaue Ausnehmung 26 des Basisgehäuses hinein verfährt oder aus dieser heraus verfährt. Der Kolben 24 und die Ausnehmung 26 definieren eine Kolbenzylinderfunktion. Über den Zu- und Abführkanal 28 kann das Beschichtungsmaterial sowohl in den Zylinderraum 26 gelangen (eingesaugt) bzw. aus diesem verdrängt werden. Die genaue Funktionsweise wird später noch anhand dem Strömungs- und Flussdiagramm erläutert.

Das Basisgehäuse 12 zusammen mit den darauf angeordneten Bauteilen und dem Injektor 16 bildet die Flutungseinheit 10.

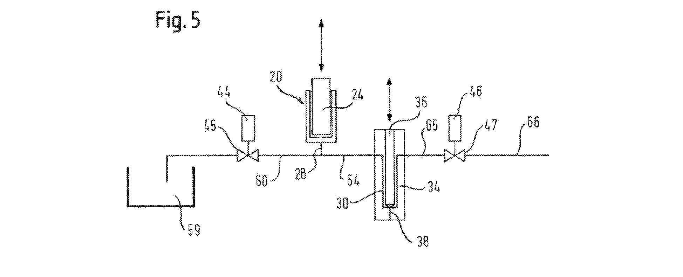

Überdies ist - in den Figuren nicht im Einzelnen dargestellt (vgl. jedoch Flussplan in Fig. 5) - die Leitung 28 mit der Materialzuführleitung 30 verbunden. Ferner besteht eine Strömungsverbindung zwischen dem Ventil 45 sowie der Kolbenpumpe 20 und schließlich auch zwischen dem Injektor und dem Ventil 47. Das Ventil 45 ist mit einem Behälter 59 über eine Leitung verbunden, und die vom Ventil 47 wegführende Leitung 66 ist ebenfalls wieder zum Behälter 59 zurückgeführt.

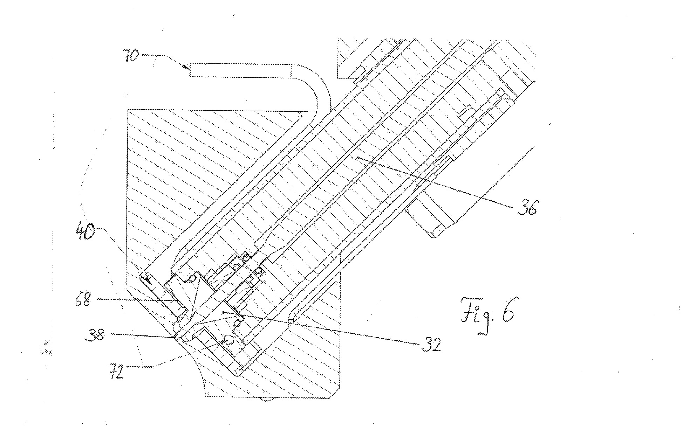

Gemäß der in Fig. 6 gezeigten Ausführungsform ist das Peltier-Element auf seiner Kalt-Seite vom Injektor geringfügig beabstandet und liegt lediglich an seiner Warmseite werkzeugseitig an. Überdies sind im Bereich der Spitze des Injektors Kühlkanäle eingearbeitet, von denen in Fig. 6 lediglich einer mit der Bezugsziffer 72 gezeigt ist. Diese Kühlkanäle werden über eine Kühlmittelzufuhr 70 mit einem Kühlmittel, vorzugsweise Wasser, beaufschlagt. Werden mehrere Kühl- oder Temperierkanäle in der Injektorspitze oder dem übrigen Injektor angeordnet, so können diese eigenständig mit Temperiermedium versorgt werden. Es hat sich in Versuchen gezeigt, dass es vorteilhaft ist, die Düsenspitze mit einer Kühlung (evtl. einer separaten Kühlung) zu versehen, da ansonsten die Gefahr besteht, dass das verwendete Material, beispielsweise ein Acryl-Material im Bereich der Nadelspitze ausreagiert.

Die Funktionsweise der Vorrichtung ist nun denkbar einfach.

Ist der Injektor 16 durch die vorverfahrene Düsennadel 36 geschlossen und ist auch das Ventil 47 geschlossen, kann bei geöffnetem Ventil 45 und einem Zurückziehen des Kolbens 24 das Beschichtungsmaterial aus dem Behälter 59 über die Leitung 60 in den Zylinderraum 26 eingesaugt werden. Nunmehr wird das Ventil 45 geschlossen.

Je nachdem, ob nun ein Einspritz- oder Rezirkulationsschritt durchgeführt werden soll, wird entweder der Injektor 16 durch Rückverfahren der Injektornadel 36 geöffnet oder aber es wird das Ventil 47 durch entsprechende Beaufschlagung des Elektromagneten 46 geöffnet.

Im ersten Fall, nämlich bei geschlossenem Ventil 47 und geöffnetem Injektor, wird beim Nach-unten-Verfahren des Kolbens 24 das in dem Zylinderraum 26 befindliche Material über die Leitungen 28 und 64 sowie die Materialzufuhrleitung 30 und den Verbindungsraum 32 wie auch die Auftragsöffnung in die Kavität eingespritzt. Ist der Einspritzvorgang beendet, so wird der Injektor 10 durch das Nach-vorne-Verfahren der Injektornadel verschlossen. Nun kann das restliche Material in dem Zylinderraum 26 bei geöffnetem Ventil 47 über die Rückführleitung 34 und die Leitungen 65 und 66 wieder zum Behälter 59 zurückgeführt werden. Ist der Injektor länger geschlossen, so kann die Pumpe 20 weiterhin bei abwechselndem Öffnen der Ventile 45 und 47 betrieben werden, so dass ein ständiger Rezirkulationsfluss gegeben ist.

Dies erlaubt insgesamt eine sehr einfache Ausgestaltung eines Injektors für ein vernetzendes oder reaktives Material. Überdies ist die Einspritzdüse bzw. der Injektor in dem Formwerkzeug integriert.

### Bezugszeichenliste

- 10: Flutungseinheit
- 12: Basisgehäuse
- 14: Werkzeug (teilweise)
- 16: Injektor
- 17: Injektorkolben
- 18: Anschlüsse für Arbeitsfluid
- 20: Pumpe
- 22: Spindel
- 24: Kolben
- 26: Ausnehmung oder Zylinder der Pumpe
- 28: Zu- und Abfluss zur Ausnehmung oder dem Pumpzylinder
- 30: Materialzufuhrkanal im Injektor
- 32: Verbindungskammer
- 34: Materialrückführkanal
- 36: Injektornadel
- 38: Nadelspitze
- 40: Peltier-Element
- 44: Gehäuse erstes Elektro-Ventil
- 45: erstes Elektro-Ventil
- 46: Gehäuse zweites Elektro-Ventil
- 47: zweites Elektro-Ventil
- 59: Behälter
- 60: Leitung zwischen erstem Elektro-Ventil und Pumpe
- 64: Leitung zwischen Pumpe und Injektor
- 65: Leitung zwischen Injektor und zweitem Elektro-Ventil
- 66: Rückleitung zum Aufbewahrungsgefäß
- 68: Abstand
- 70: Kühlmittelzufuhr
- 72: Bohrung für Kühlmittel in der Injektorspitze

## Patentansprüche

1. Verfahren zum Betrieb eines zumindest teilweise in einem Formwerkzeug aufgenommenen Injektors, dessen Austragsöffnung in die geschlossene Kavität mündet, mit dem Material in die geschlossene Kavität eines Formwerkzeugs eingespritzt wird,
**dadurch gekennzeichnet, dass**
dass der Injektor (10) temperiert, gekühlt oder geheizt wird.

2. Verfahren nach Anspruch 1,
**dadurch gekennzeichnet,**
**dass** der Injektor im Einspritzbetrieb sowie im Rezirkulationsbetrieb betrieben wird.

3. Verfahren nach Anspruch 1 oder 2,
**dadurch gekennzeichnet,**
**dass** das Material über Druck durch den Injektor in die geschlossene Kavität eingebracht wird.

4. Verfahren nach einem der vorhergehenden Ansprüche,
**dadurch gekennzeichnet,**
**dass** das Material in der Versorgungsleitung (65, 66) strömungsmäßig nach dem Material-Rückflusskanal zeitweise abgesperrt wird.

5. Verfahren nach einem der vorhergehenden Ansprüche,
**dadurch gekennzeichnet,**
**dass** das Material in der Versorgungsleitung (60) strömungsmäßig vor der Pumpe (20) zeitweise abgesperrt wird.

6. Formwerkzeug nach einem der vorhergehenden Ansprüche,
**dadurch gekennzeichnet,**
**dass** die Kühlung mittels einem Kühlelement zwischen dem Injektor (10) und dem Formwerkzeug (14) durchgeführt wird.

7. Formwerkzeug nach Anspruch 6,
**dadurch gekennzeichnet,**
**dass** als Kühlelement ein Peltierelement (40) verwendet wird, welches den Injektorseite kühlt und das Formwerkzeug heizt.

8. Verfahren nach einem der vorhergehenden Ansprüche,
**dadurch gekennzeichnet,**
**dass** die Kühlung in der Injektorspitze über einen Kühlkanal durchgeführt wird.

9. Verfahren nach Anspruch 8,
**dadurch gekennzeichnet,**
**dass** ein Kühlmittel durch zumindest einen Kühlkanal geführt wird.
